# DEMANDE DE BREVET EUROPEEN

(11) **EP 0 561 711 A1**
(43) Date de publication de la demande: **22.09.1993**
(21) Numéro de dépôt: 93400715.4
(22) Date de dépôt: 19.03.1993
(51) Int. Cl.: B60J 10/02, B29C 47/02

(54) **Montant pour porte d'automobile à vitres fixe et mobile**

(30) Priorité: 19.03.1992 FR 9203282
(71) Demandeur: HUTCHINSON, F-75008 Paris (FR)
(72) Inventeur: Guillon, Henri, 45700 Saint Maurice/Fessard (FR)
(74) Mandataire: Ores, Irène

(57) **Abrégé**

Montant à âme métallique de porte de véhicule automobile à section droite en forme générale de H et à dispositif d'étanchéité pour vitres fixe et mobile formant un ensemble monobloc.

Ledit ensemble est extrudé ou surmoulé d'une pièce sur l'âme métallique (14a) du montant (14) dont il est ainsi rendu adhérent de fabrication même pour présenter des faces interne et externe (35, 36) lisses et pleines sur toute leur surface.

## Description

L'invention a pour objet un montant pour porte d'automobile à vitres fixe et mobile

On sait que, dans certaines réalisations, les portes de véhicules automobiles comprennent, côte à côte, une vitre fixe et une vitre mobile séparées par un montant sur lequel sont fixés des moyens d'étanchéité pour chacune des vitres et, plus précisément, un dispositif du type coulisse pour la vitre mobile et un profilé à section droite en forme générale de U pour la vitre fixe. Pour simplifier le montage des dispositifs d'étanchéité associés à une telle porte de véhicule automobile, - montage dont la complexité apparaît par exemple à la lecture de FR-2 641 746-, on a déjà proposé des dispositifs d'étanchéité comportant un joint du type coulisse pour la vitre mobile solidaire d'un joint à section droite en forme générale de U pour la vitre fixe voir, par exemple, FR-A-2 648 858, FRA-2- 642 374 ou FR-A-2 604 766. Dans le second des documents cités, le joint de vitre coulissante et le joint de vitre fixe font partie d'un ensemble modulaire complexe de glace de custode de porte d'automobile, tandis que dans les dispositifs selon le premier et le troisième des documents cités ci-dessus, le joint de vitre coulissante et le joint de vitre fixe sont solidarisés au moyen d'un élément externe au montant à section droite quelque peu en forme de H et auquel ils sont fixés par des lèvres de maintien. Si on fournit, dans les dispositifs mentionnés en dernier lieu, un ensemble monobloc plus facile à mettre en oeuvre que les dispositifs d'étanchéité distincts jusqu'alors connus, il n'en demeure pas moins que la solidarisation de l'ensemble monobloc et du montant exige une opération de montage, dont on a indiqué à gel point elle était parfois mal commode, d'une part, et que, d'autre part,ledit montage ne peut être effectué qu'au moyen d'un système de lèvres qui ne permet pas d'obtenir pour le montant un habillage entièrement satisfaisant du point de vue esthétique.

C'est, par conséquent, un but général de l'invention de fournir un montant perfectionné qui pallie les deux inconvénients qui viennent d'être rappelés des dispositifs antérieurs.

C'est, à cet égard, un but de l'invention de fournir un tel montant perfectionné dont l'aspect, aussi bien à l'extérieur qu'à l'intérieur du véhicule dont il équipe une porte, soit totalement satisfaisant pour les constructeurs de véhicules automobiles.

C'est, aussi, un but de l'invention de fournir 'un tel montant perfectionné qui, outre ses qualités d'aspect, soit d'une utilisation particulièrement simple, en particulier pour sa liaison à d'autres éléments du dispositif d'étanchéité de la baie de porte qu'il équipe, tout en présentant les qualités de résistance mécanique que l'on attend d'un montant de porte usuel.

Un montant à âme métallique de porte de véhicule automobile, à section droite en forme générale de H et à dispositif d'étanchéité pour vitres fixe et mobile formant un ensemble monobloc est caractérisé, selon l'invention, en ce que ledit ensemble est extrudé ou surmoulé d'une pièce sur l'âme métallique du montant dont il est ainsi rendu adhérent de fabrication même.

Dans un mode d'exécution préféré, l'ensemble monobloc d'étanchéité est rapporté sur l'âme métallique formant armature par un procédé d'extrusion ou de coextrusion du ou des matériau(x) constitutif(s) du dispositif d'étanchéité.

Selon une autre caractéristique de l'invention, le montant présente des faces interne et externe lisses et pleines sur toute leur surface et qui résultent de l'extrusion ou du surmoulage avec, de ce fait, adhérisation du ou des matériau(x) constitutif(s) du dispositif d'étanchéité sur les ailes sensiblement parallèles de l'âme métallique à section droite en H du montant.

Dans une forme de réalisation préférée, au moins une des extrémités du montant est façonnée, avantageusement par usinage, pour ménager une découpe d'accostage du montant au reste des moyens d'étanchéité de la baie de porte qu'équipe ledit montant.

D'autres caractéristiques et avantages de l'invention apparaîtront de la description qui suit, faite à titre d'exemple et en référence au dessin annexé dans lequel :
- la figure 1 est une vue schématique d'une partie d'automobile à porte comprenant une vitre fixe et une vitre mobile ;
- la figure 2 est une vue en coupe, à plus grande échelle, selon la ligne II-II de la figure 1 ;
- la figure 3 est une vue en coupe illustrant la technique antérieure.

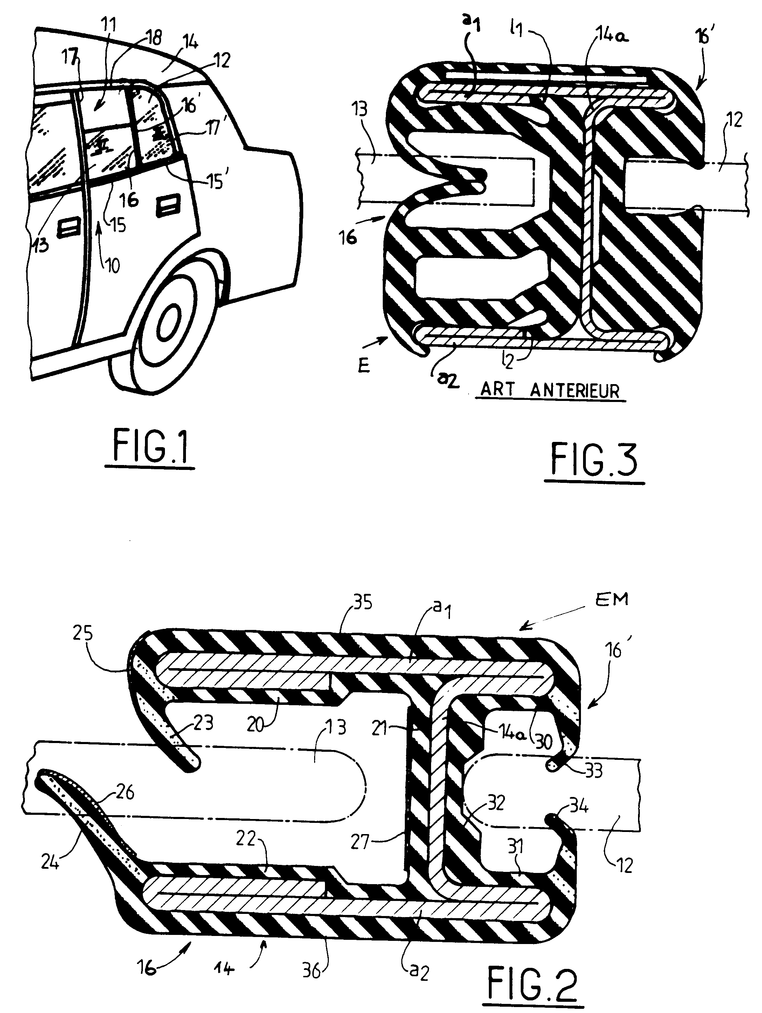

Comme montré sur la figure 1, une porte 10 de véhicule automobile, par exemple une porte arrière, comporte une baie 11 dans laquelle sont placées côte à côte une vitre fixe 12 et une vitre mobile 13, séparées par un montant 14. A chacune des vitres 12 et 13 est associé un dispositif d'étanchéité comportant, pour la vitre mobile 13, un lécheur de bas de porte 15, des coulisses latérales 16 et 17 et une coulisse supérieure 18, les éléments correspondants, mais associés à la vitre fixe 12, étant montrés en 15' pour la partie correspondant au lécheur 15, en 16' pour la partie correspondant à la coulisse 16 et en 17' pour la partie correspondant à la fois à la partie 17 et à la partie 18. Dans les réalisations connues, par exemple selon FR-2 604 766, un ensemble monobloc E comprenant les parties d'étanchéité 16 et 16', figure 3, est rapporté sur le montant 14 où il est maintenu par des lèvres l₁ et l₂, de sorte que le montage de l'ensemble E sur l'âme métallique 14a à section droite en forme générale de H du montant est relativement difficile, d'une part et ne permet pas, d'autre part, de masquer la totalité de l'armature, en particulier l'aile a₂.

Pour pallier cet inconvénient, l'invention prévoit que l'ensemble monobloc EM réunissant les moyens d'étanchéité 16' de la vitre fixe 12 et les moyens d'étanchéité 16 associés à la vitre mobile 13, figure 2, soient rapportés sur une armature en H, 14a, le plus simplement par une opération de surmoulage c'est-à-dire par mise en place des éléments dans un moule puis vulcanisation dans le cas de moyens d'étanchéité en élastomère(s) ou, de préférence par extrusion directe du ou des matériau(x) constitutif(s) des moyens d'étanchéité sur ladite armature extrusion qui, outre la simplicité de fabrication, assure de ce fait même, l'adhérence sur ladite armature desdits moyens d'étanchéité.

De façon plus précise, l'invention prévoit de tirer parti des possibilités offertes par les techniques de coextrusion pour faire adhérer sur l'armature métallique 14a à section droite en forme générale de H du montant et au cours d'une même opération, à la fois des parties comme 20, 21 et 22 en matériau élastomère ou plastomère relativement dur (définissant le canal en U d'une coulisse de réception et de guidage de la vitre mobile 13) et des lèvres d'étanchéité comme 23 et 24 en matériau plus souple que celui des parties 20-22 (représentées ici dans leur condition non-sollicitée comme habituel dans la technique des élastomères), lesdites lèvres étant en outre partiellement revêtues sur leurs zones opératoires d'une mince pellicule 25, 26, en un matériau à bonnes propriétés de glissement, elle aussi déposée au cours du processus de coextrusion et qui est, par exemple, à base de polytétrafluoroéthylène ou de polyoléfine, une mince pellicule 27 en le même matériau étant avantageusement également disposée sur la partie 21 pour contribuer au bon coulissement de la vitre mobile 13.

C'est une même structure en plusieurs matériaux, - à l'exception toutefois des couches à base de polytétrafluoroéthylène ou de polyoléfine, qui est prévue pour la partie d'étanchéité 16' associée à la vitre fixe, et cela pour ménager un profilé à section droite sensiblement en C à branches 30 et 31 terminées par des lèvres d'étanchéité 33 et 34 réunies par un fond 32.

Dans la réalisation selon l'invention, la totalité des ailes a₁ et a₂ de l'armature 14a du montant 14 sont recouvertes par le ou les matériaux constitutif(s) du dispositif d'étanchéité monobloc, de sorte que l'aspect dudit montant 14, - en dehors des zones avec lesquelles coopèrent les vitres fixe et mobile, - est celui de deux surfaces 35 et 36 parfaitement lisses, sans défaut, telles qu'elles peuvent être obtenues par les techniques d'extrusion, d'une part, tandis que, d'autre part, la solidarisation par effet même de l'extrusion des dispositifs d'étanchéité et de l'armature garantit un positionnement inaltérable dans le temps, obtenu au demeurant sans difficulté aucune.

L'invention permet en outre une fabrication en continu des montants d'un même modèle, lesquels peuvent être, le cas échéant, galbés et cintrés, pendant ou après la phase de coextrusion, par exemple au cours du processus de vulcanisation lorsque la ou les matière(s) constitutive(s) des dispositifs d'étanchéité est (sont) du type caoutchoutique.

Les montants selon l'invention peuvent, après découpe d'un profilé continu suivant des tronçons de longueur appropriée, être façonnés à une ou à leurs deux extrémité(s) suivant une coupe biaise, par exemple par fraisage ou par une autre technique d'usinage, pour permettre de réaliser de façon simple et élégante l'accostage des montants en partie haute de la baie de porte, là où règnent les parties d'étanchéité comme 17' ou 18.

## Revendications

1. Montant à âme métallique de porte de véhicule automobile à section droite en forme générale de H et à dispositif d'étanchéité pour vitres fixe et mobile formant un ensemble monobloc (EM), caractérisé en ce que ledit ensemble est extrudé ou surmoulé d'une pièce sur l'âme métallique (14a) du montant (14) dont il est ainsi rendu adhérent de fabrication même.

2. Montant selon la revendication 1, caractérisé en ce que l'ensemble monobloc d'étanchéité (EM) est rapporté sur l'âme métallique (14a) du montant par un procédé d'extrusion ou de coextrusion du ou des matériau (x) constitutif(s) du dispositif d'étanchéité.

3. Montant selon l'une quelconque des revendications précédentes, caractérisé en ce qu'il présente des faces interne et externe (35, 36) lisses et pleines sur toute leur surface et qui résultent de l'extrusion ou du surmoulage avec, de ce fait, adhérisation du ou des matériau(x) constitutif(s) du dispositif d'étanchéité sur l'âme métallique du montant.

4. Montant selon l'une quelconque des revendications précédentes, caractérisé en ce qu'au moins une de ses extrémités est façonnée, avantageusement par usinage, pour ménager une découpe d'accostage du montant (14) au reste des moyens d'étanchéité de la baie de porte (10) qu'équipe ledit montant.
